# EUROPEAN PATENT APPLICATION

(11) **EP 4 403 602 A1**
(43) Date of publication of application: **24.07.2024**
(21) Application number: 22870318.7
(22) Date of filing: 15.09.2022
(51) Int. Cl.: C08L 9/04, C08L 13/02, C08F 236/12, C08F 2/22

(54) **POLYMER COMPOSITION, PREPARATION METHOD THEREFOR, LATEX COMPOSITION FOR DIP FORMING INCLUDING SAME, AND FORMED ARTICLE**

(30) Priority: 17.09.2021 KR 20210125033
(71) Applicant: LG Chem, Ltd., Seoul 07336 (KR)
(72) Inventor: JUNG, Yong Seok, Daejeon 34122 (KR); KIM, Hyun Woo, Daejeon 34122 (KR); HAN, Jung Su, Daejeon 34122 (KR); PAK, Seong Yeol, Daejeon 34122 (KR)
(74) Representative: Goddar, Heinz J.
(86) International application number: PCT/KR2022/013808
(87) International publication number: WO 2023/043234

(57) **Abstract**

The present invention relates to a polymer composition applicable as a latex stabilizer of a latex composition for dip molding, a method for preparing the same, a latex composition for dip molding, including the same to have improved latex stability, and a molded article molded therefrom to have improved wearability and tensile properties.

## Description

### TECHNICAL FIELD

### Cross-reference to Related Applications

This application claims the benefit of Korean Patent Application No. 10-2021-0125033, filed on September 17, 2021, in the Korean Intellectual Property Office, the disclosure of which is incorporated herein in its entirety by reference.

### Technical Field

The present invention relates to a polymer composition applicable as a latex stabilizer of a latex composition for dip molding, a method for preparing the same, a latex composition for dip molding, including the same to have improved latex stability, and a molded article molded therefrom to have improved wearability and tensile properties.

### BACKGROUND ART

Typically, natural rubber has been mainly used as a raw material of industrial, medical, and food gloves, and products requiring elasticity such as balloons and condoms. However, in recent years, the natural rubber has been replaced with nitrile-based rubber due to side effects that cause serious allergic reactions to protein in some users. The nitrile-based rubber has high chemical resistance, and thus is widely used particularly in work gloves for users dealing with organic solvents, or in medical and food gloves.

In addition, recently, due to an unstable supply of the natural rubber, a number of glove manufacturers have shifted natural rubber glove production lines to nitrile-based rubber glove production lines, and greater awareness of safety brings with it a steady increase in the use of disposable gloves manufactured from the nitrile-based rubber.

These nitrile-based rubber gloves are generally manufactured through dip molding from latex for dip molding. In this case, when the latex for dip molding has low stability, coagulation is generated, and the generated coagulation increases defect rates of finally prepared dip molded articles, causing a decrease in productivity, and in serious cases, dip molding itself is not available.

In particular, when the temperature is lowered to a sub-zero level as in winter, the stability of the latex for dip molding is rapidly reduced, accordingly leading to an increase in coagulation and precipitate in the latex for dip molding in storage. Therefore, methods for improving the low temperature stability as well as the storage stability of the latex for dip molding are called upon.

Meanwhile, the nitrile-based rubber gloves, which are dip molded articles manufactured from the latex for dip molding, are unfortunately less soft than gloves manufactured from natural rubber. This causes poorer wearability upon wearing the gloves, and in particular, when used as surgical gloves, the nitrile-based rubber gloves are not good enough to replace natural rubber gloves. Therefore, there remains a need for a method for improving the softness of the gloves.

### [Related Art Document]

### [Patent Document]

(Patent Document 1) KR 10-2014-0053859 A

### DISCLOSURE OF THE INVENTION

### TECHNICAL PROBLEM

A task to be solved in the present invention to overcome the limitations described above in the background art is to improve storage stability and low temperature stability of a latex composition for dip molding as well as to improve softness of a molded article molded therefrom so as to enhance wearability.

That is, the present invention is designed to address the limitations from the related art, and thus, an aspect of the present invention provides a polymer composition applicable as a latex stabilizer of a latex composition for dip molding and a method for preparing the same to improve storage stability and low temperature stability of the latex composition for dip molding.

In addition, another aspect of the present invention provides a latex composition for dip molding, which has improved latex stability, particularly storage stability and low temperature stability by including the polymer composition.

In addition, another aspect of the present invention provides a molded article molded from the latex composition for dip molding, which has improved softness for excellent wearability, and excellent tensile properties.

### TECHNICAL SOLUTION

In order to address the above-described tasks, the present invention provides a polymer composition, a method for preparing the polymer composition, a latex composition for dip molding, and a molded article.

(1) The present invention provides a polymer composition dispersed in a solvent, wherein the polymer includes a conjugated diene-based monomer unit, an ethylenically unsaturated nitrile-based monomer unit, and an ethylenically unsaturated acid monomer unit, and the polymer has a weight average molecular weight of 5,000 g/mol to 50,000 g/mol, and a glass transition temperature of -34 °C to 33 °C.

(2) The present invention provides the polymer composition according to (1) above, wherein the solvent is an aqueous solvent.

(3) The present invention provides the polymer composition according to (1) or (2) above, wherein the polymer includes the conjugated diene-based monomer unit in an amount of 40 wt% to 75 wt%, the ethylenically unsaturated nitrile-based monomer unit in an amount of 10 wt% to 50 wt%, and the ethylenically unsaturated acid monomer unit in an amount of 10 wt% to 50 wt%.

(4) The present invention provides the polymer composition according to (1) to (3) above, wherein the polymer has a weight average molecular weight of 7,000 g/mol to 46,000 g/mol.

(5) The present invention provides the polymer composition according to (1) to (4) above, wherein the polymer has a glass transition temperature of -28 °C to 24 °C.

(6) The present invention provides the polymer composition according to (1) to (5) above, wherein the polymer composition has a pH of 7.0 to 10.0 at 25 °C.

(7) The present invention provides a method for preparing a polymer composition, the method including: a step (S10) of preparing a polymer latex including a polymer through emulsion polymerization of a conjugated diene-based monomer, an ethylenically unsaturated nitrile-based monomer, and an ethylenically unsaturated acid monomer in a solvent, wherein the polymer polymerized in the step (S10) has a weight average molecular weight of 5,000 g/mol to 50,000 g/mol, and a glass transition temperature of -34 °C to 33 °C.

(8) The present invention provides the method according to (7) above, wherein the emulsion polymerization of the step (S10) is performed by adding a molecular weight regulator in an amount of 0.8 parts by weight to 8.0 parts by weight with respect to 100 parts by weight of a total monomer amount.

(9) The present invention provides the method according to (7) or (8) above, wherein the method includes a step (S20) of adding a ph regulator to the polymer latex prepared in the step (S10); and a step (S30) of obtaining the polymer latex that pH is regulated in the step (S20) in an emulsion phase.

(10) The present invention provides a latex composition for dip molding, which includes a carboxylic acid-modified nitrile-based copolymer latex and the polymer composition according to any one of (1) to (6) above, wherein the carboxylic acid-modified nitrile-based copolymer latex includes a carboxylic acid-modified nitrile-based copolymer, and the carboxylic acid-modified nitrile-based copolymer includes a conjugated diene-based monomer unit, an ethylenically unsaturated nitrile-based monomer unit, and an ethylenically unsaturated acid monomer unit.

(11) The present invention provides the latex composition for dip molding according to (10) above, wherein the latex composition for dip molding includes the polymer composition in an amount of 1 part by weight to 15 parts by weight in terms of solid content with respect to 100 parts by weight of the carboxylic acid-modified nitrile-based copolymer latex in terms of solid content.

(12) The present invention provides a molded article including a layer derived from the latex composition for dip molding according to (10) or (11) above.

### ADVANTAGEOUS EFFECTS

A polymer composition according to the present invention may be applicable as a latex stabilizer of a latex composition for dip molding, and may improve latex stability, particularly storage stability and low temperature stability of a latex composition for dip molding, which includes the polymer composition.

In addition, a molded article according to the present invention is molded from the latex composition for dip molding to have improved softness for excellent wearability, and excellent tensile properties.

### MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The term "monomer unit" as used herein may refer to a component, a structure, or a material itself resulting from a monomer, and specifically, may refer to a repeating unit constituted in a polymer when monomers to be added participate in a polymerization reaction upon polymerizing the polymer.

The term "polymer" as used herein may refer to both a homopolymer formed through polymerization from one type of monomer and a copolymer formed through copolymerization from two types of monomers.

The term 'latex' and 'emulsion' as used herein may refer to a polymer or a copolymer, which is polymerized through polymerization, being present in a form dispersed in water, and as a specific example, may refer to fine particles of a polymer in a rubber phase or of a copolymer in a rubber phase, which is polymerized through emulsion polymerization, being present in a form dispersed in water in a colloid state.

The term "composition" as used herein includes reaction products and decomposition products formed from materials of the composition as well as a mixture of materials including the composition.

The term, "layer derived" as used herein may refer to a layer formed from a polymer or a copolymer, specifically a layer formed from a polymer or a copolymer in which the polymer or the copolymer is attached, fixed, and/or polymerized on a dip mold upon preparation of a dip-molded article.

The present invention provides a polymer composition applicable as a latex stabilizer of a latex composition for dip molding.

According to an embodiment of the present invention, the polymer composition may be an alkali-soluble polymer composition, specifically an alkali-soluble emulsion polymer, that is, an alkali soluble resin (ASR). Accordingly, the polymer composition may be present in a latex state.

According to an embodiment of the present invention, the polymer composition may include a polymer dispersed in a solvent, the polymer may include a conjugated diene-based monomer unit, an ethylenically unsaturated nitrile-based monomer unit, and an ethylenically unsaturated acid monomer unit, and the polymer may have a weight average molecular weight of 5,000 g/mol to 50,000 g/mol, and a glass transition temperature of -34 °C to 33 °C.

According to an embodiment of the present invention, the polymer composition may be present in a latex state, and accordingly, the polymer may be present in a form dispersed in a solvent. The polymer composition may be prepared through emulsion polymerization as follows, and accordingly, the solvent may be an aqueous solvent that may be used upon the emulsion polymerization. As a specific example, the aqueous solvent may be water, and the water may be ion-exchanged water or distilled water.

According to an embodiment of the present invention, the polymer may include a conjugated diene-based monomer unit, an ethylenically unsaturated nitrile-based monomer unit, and an ethylenically unsaturated acid monomer unit. Alkali-soluble resins known in the related art generally include an acrylate-based monomer as a main monomer. However, the alkali-soluble resins including such an acrylate-based monomer has low compatibility with a carboxylic acid-modified nitrile-based copolymer in the carboxylic acid-modified nitrile-based copolymer latex included in the latex composition for dip molding, and thus are not suitable to be applied as a latex stabilizer of a latex composition for dip molding. To overcome the above issue, the polymer of the present invention is characterized in that the polymer includes the same monomer as the carboxylic acid-modified nitrile-based copolymer or a monomer unit derived from a monomer of the same family, and accordingly, the polymer of the present invention is suitable to be used as a latex stabilizer of the latex composition for dip molding, and has improved wearability and mechanical properties such as tensile properties of a molded article as well.

According to an embodiment of the present invention, the conjugated diene-based monomer for forming the conjugated diene-based monomer unit may be at least one selected from the group consisting of 1,3-butadiene, 2,3-dimethyl-1,3-butadiene, 2-ethyl-1,3-butadiene, 1,3-pentadiene, and isoprene, and as a specific example, may be 1,3-butadiene or isoprene, and more specifically, may be 1,3-butadiene.

According to an embodiment of the present invention, the ethylenically unsaturated nitrile-based monomer forming the ethylenically unsaturated nitrile-based monomer unit may be at least one selected from the group consisting of acrylonitrile, methacrylonitrile, fumaronitrile, α-chloronitrile and α-cyanoethyl acrylonitrile, and as a specific example, may be acrylonitrile and methacrylonitrile, and more specifically, may be acrylonitrile.

According to an embodiment of the present invention, the ethylenically unsaturated acid monomer forming the ethylenically unsaturated acid monomer unit may be an ethylenically unsaturated monomer including an acidic group such as a carboxyl group, a sulfonic acid group, or an acid anhydride group, and as a specific example, may be at least one selected from the group consisting of ethylenically unsaturated carboxylic acid monomers such as acrylic acid, methacrylic acid, itaconic acid, maleic acid, and fumaric acid; polycarboxylic anhydrides such as maleic anhydride and citraconic anhydride; ethylenically unsaturated sulfonic acid monomers such as styrene sulfonic acid; ethylenically unsaturated polycarboxylic acid partial ester monomers such as monobutyl fumarate, monobutyl maleate, and mono-2-hydroxy propyl maleate, and more specifically, may be methacrylic acid. The ethylenically unsaturated acid monomer may be used in the form of a salt such as an alkali metal salt or an ammonium salt upon polymerization.

According to an embodiment of the present invention, the polymer may include a conjugated diene-based monomer unit in an amount of 40 wt% to 75 wt%, an ethylenically unsaturated nitrile-based monomer unit in an amount of 10 wt% to 50 wt%, and an ethylenically unsaturated acid monomer unit in an amount of 10 wt% to 50 wt%, and within this range, a glass transition temperature desired in the present invention may be satisfied to keep balance between wearability and tensile properties.

According to an embodiment of the present invention, the polymer may include a conjugated diene-based monomer unit in an amount of 40 wt% or greater, 45 wt% or greater, 50 wt% or greater, 55 wt% or greater, or 60 wt% or greater, and also in an amount of 75 wt% or less, 70 wt% or less, 65 wt% or less, or 60 wt% or less, and within this range, both regulating a glass transition temperature and improving mechanical properties such as tensile properties of a molded article molded from a latex composition for dip molding including the polymer composition may be achieved.

According to an embodiment of the present invention, the polymer may include an ethylenically unsaturated nitrile-based monomer unit in an amount of 10 wt% or greater, 11 wt% or greater, 12 wt% or greater, 13 wt% or greater, 14 wt% or greater, 15 wt% or greater, 16 wt% or greater, 17 wt% or greater, 18 wt% or greater, 19 wt% or greater, or 20 wt% or greater, and also in an amount of 50 wt% or less, 45 wt% or less, 40 wt% or less, 35 wt% or less, 30 wt% or less, 25 wt% or less, 24 wt% or less, 23 wt% or less, 22 wt% or less, 21 wt% or less, or 20 wt% or less, and within this range, both regulating a glass transition temperature and improving mechanical properties such as tensile properties of a molded article molded from a latex composition for dip molding including the polymer composition may be achieved.

According to an embodiment of the present invention, the polymer may include an ethylenically unsaturated acid monomer unit in an amount of 10 wt% or greater, 11 wt% or greater, 12 wt% or greater, 13 wt% or greater, 14 wt% or greater, 15 wt% or greater, 16 wt% or greater, 17 wt% or greater, 18 wt% or greater, 19 wt% or greater, or 20 wt% or greater, and also in an amount of 50 wt% or less, 45 wt% or less, 40 wt% or less, 35 wt% or less, 30 wt% or less, 25 wt% or less, 24 wt% or less, 23 wt% or less, 22 wt% or less, 21 wt% or less, or 20 wt% or less, and within this range, both regulating a glass transition temperature and improving mechanical properties such as tensile properties of a molded article molded from a latex composition for dip molding including the polymer composition may be achieved.

According to an embodiment of the inventive concept, the polymer may have a weight average molecular weight of 5,000 g/mol to 50,000 g/mol. As a specific example, the polymer may have a weight average molecular weight of 5,000 g/mol or greater, 5,500 g/mol or greater, 6,000 g/mol or greater, 6,500 g/mol or greater, 7,000 g/mol or greater, 7,500 g/mol or greater, 8,000 g/mol or greater, 8,500 g/mol or greater, 9,000 g/mol or greater, 9,500 g/mol or greater, 10,000 g/mol or greater, 10,500 g/mol or greater, 11,000 g/mol or greater, 11,500 g/mol or greater, or 12,000 g/mol or greater, and also 50,000 g/mol or less, 49,000 g/mol or less, 48,000 g/mol or less, 47,000 g/mol or less, 46,000 g/mol or less, 45,000 g/mol or less, 40,000 g/mol or less, 35,000 g/mol or less, 30,000 g/mol or less, 25,000 g/mol or less, 20,000 g/mol or less, 15,000 g/mol or less, 14,000 g/mol or less, 13,000 g/mol or less, or 12,000 g/mol or less. In this case, when the weight average molecular weight of the polymer is lower than the above-described range, in the latex composition for dip molding, entanglement between the polymer and the carboxylic acid-modified nitrile-based copolymer is lowered to deteriorate mechanical properties such as tensile properties of a molded article molded from the latex composition for dip molding. In addition, when the weight average molecular weight of the polymer is higher than the above-described range, when preparing the polymer composition, stability of the latex is lowered due to an increase in viscosity to hardly complete the polymerization substantially, making it impossible to prepare a polymer composition.

According to an embodiment of the inventive concept, the polymer may have a glass transition temperature of -34 °C to 33 °C. As a specific example, the polymer may have a glass transition temperature of -34 °C or higher, -33 °C or higher, -32 °C or higher, -30 °C or higher, -29 °C or higher, -28 °C or higher, -27 °C or higher, -26 °C or higher, -25 °C or higher, -20 °C or higher, -15 °C or higher, -14 °C or higher, -13 °C or higher, or -12 °C or higher, and also 33 °C or lower, 32 °C or lower, 31 °C or lower, 30 °C or lower, 29 °C or lower, 28 °C or lower, 27 °C or lower, 26 °C or lower, 25 °C or lower, 24 °C or lower, 23 °C or lower, 22 °C or lower, 21 °C or lower, 20 °C or lower, 15 °C or lower, 10 °C or lower, 5 °C or lower, 0 °C or lower, -5 °C or lower, -10 °C or lower, -11 °C or lower, or -12 °C or lower. In this case, when the glass transition temperature of the polymer is lower than the above-described range, tensile strength of a molded article molded from the latex composition for dip molding is lowered, and when the glass transition temperature of the polymer is higher than the above-described range, a molded article molded from the latex composition for dip molding is hardened to deteriorate wearability. Therefore, both wearability and mechanical properties such as tensile properties of a molded article molded from the latex composition for dip molding may be improved by regulating the glass transition temperature of the polymer within the range described above. In this case, the glass transition temperature may be regulated from the amount of each monomer unit of the polymer, in particular, the amount of the conjugated diene-based monomer unit, and may be measured using differential scanning calorimetry (DSC).

According to an embodiment of the inventive concept, the polymer composition may have a pH of 7.0 to 10.0 at 25 °C. As a specific example, the polymer composition may have a pH of 7.0 or greater, 7.1 or greater, 7.2 or greater, 7.3 or greater, 7.4 or greater, 7.5 or greater, 7.6 or greater, 7.7 or greater, 7.8 or greater, 7.9 or greater, or 8.0 or greater, and also 10.0 or less, 9.9 or less, 9.8 or less, 9.7 or less, 9.6 or less, 9.5 or less, 9.4 or less, 9.3 or less, 9.2 or less, 9.1 or less, or 9.0 or less, and within this range, latex stability of the latex composition for dip molding, in particular, storage stability and low temperature stability may be further improved.

The present invention provides a method for preparing a polymer composition to prepare the polymer composition.

According to an embodiment of the present invention, the method for preparing the polymer composition includes a step (S10) of preparing a polymer latex including a polymer through emulsion polymerization of a conjugated diene-based monomer, an ethylenically unsaturated nitrile-based monomer, and an ethylenically unsaturated acid monomer in a solvent, and the polymer polymerized in the step (S10) may have a weight average molecular weight of 5,000 g/mol to 50,000 g/mol, and a glass transition temperature of -34 °C to 33 °C.

According to an embodiment of the present invention, the solvent, the conjugated diene-based monomer, the ethylenically unsaturated nitrile-based monomer, and the ethylenically unsaturated acid monomer may be the same as those described above.

According to an embodiment of the present invention, the step (S10) is a step for preparing a polymer composition in a latex state, and may be performed through emulsion polymerization. In this case, the emulsion polymerization of the step (S10) may be performed in the presence of an emulsifier and a molecular weight regulator.

According to an embodiment of the present invention, the emulsion polymerization of the step (S10) may be performed in the presence of an emulsifier, the emulsifier may be at least one selected from the group consisting of anionic surfactants, nonionic surfactants, cationic surfactants, and amphoteric surfactants, and as a specific example, may be at least one anionic surfactant selected from the group consisting of alkylbenzene sulfonates, aliphatic sulfonates, higher alcohol sulfate ester salts, α-olefin sulfonates, and alkyl ether sulfate ester salts.

According to an embodiment of the present invention, the emulsion polymerization of the step (S10) may be performed by adding an emulsifier in an amount of 1.0 parts by weight to 5.0 parts by weight, with respect to 100 parts by weight of a total monomer amount, and as a specific example, may be performed by adding an emulsifier in an amount of 1.0 parts by weight or greater, 1.5 parts by weight or greater, 2.0 parts by weight or greater, or 2.5 parts by weight or greater and also 5.0 parts by weight or less, 4.5 parts by weight or less, 4.0 parts by weight or less, 3.5 parts by weight or less, 3.0 parts by weight or less, or 2.5 parts by weight or less, and within this range, the polymerization stability may be greater.

According to an embodiment of the present invention, the emulsion polymerization of the step (S10) may be performed in the presence of a molecular weight regulator, and the molecular weight regulator may be at least one selected from the group consisting of α-methylstyrene dimer; mercaptans such as t-dodecyl mercaptan, n-dodecyl mercaptan, and octyl mercaptan; halogenated hydrocarbons such as carbon tetrachloride, methylene chloride, and methylene bromide; sulfur-containing compounds such as tetraethyl thiuram disulfide, dipentamethylene thiuram disulfide, and diisopropylxantogen disulfide, and as a specific example, may be t-dodecyl mercaptan.

According to an embodiment of the present invention, the emulsion polymerization of the step (S10) may be performed by adding a molecular weight regulator in an amount of 0.8 parts by weight to 8.0 parts by weight, with respect to 100 parts by weight of a total monomer amount, and as a specific example, may be performed by adding a molecular weight regulator in an amount of 0.8 parts by weight or greater, 0.9 parts by weight or greater, 1.0 parts by weight or greater, 1.5 parts by weight or greater, 2.0 parts by weight or greater, 2.5 parts by weight or greater, 3.0 parts by weight or greater, or 3.5 parts by weight or greater, and also 8.0 parts by weight or less, 7.5 parts by weight or less, 7.0 parts by weight or less, 6.5 parts by weight or less, 6.0 parts by weight or less, 5.5 parts by weight or less, 5.0 parts by weight or less, 4.5 parts by weight or less, 4.0 parts by weight or less, or 3.5 parts by weight or less, and within this range, by properly controlling the molecular weight of the polymer, both preventing deterioration of latex stability due to an increase in viscosity, and improving entanglement between the polymer and the carboxylic acid-modified nitrile-based copolymer may be achieved to further improve mechanical properties such as tensile properties of a molded article molded from a latex composition for dip molding.

According to an embodiment of the present invention, the emulsion polymerization of the step (S10) may be initiated by adding a polymerization initiator, the polymerization initiator may be a radical initiator, and as a specific example, may be at least one selected from the group consisting of inorganic peroxides such as sodium persulfate, potassium persulfate, ammonium persulfate, potassium perphosphate, and hydrogen peroxide; organic peroxides such as t-butyl peroxide, cumene hydroperoxide, p-menthane hydroperoxide, di-t-butyl peroxide, t-butylcumyl peroxide, acetyl peroxide, isobutyl peroxide, octanoyl peroxide, dibenzoyl peroxide oxide, 3,5,5-trimethylhexanol peroxide, and t-butyl peroxy isobutylate; and nitrogen compounds such as azobiscyclohexanecarbonitrile and azobisisobutyrate (butyric acid) methyl, specifically inorganic peroxide, and more specifically persulfate.

According to an embodiment of the present invention, the emulsion polymerization of the step (S10) may be performed by adding a polymerization initiator in an amount of 0.01 parts by weight to 2.0 parts by weight, with respect to 100 parts by weight of a total monomer amount, and as a specific example, may be performed by adding a polymerization initiator in an amount of 0.01 parts by weight or greater, 0.05 parts by weight or greater, 0.1 parts by weight or greater, 0.2 parts by weight or greater, 0.3 parts by weight or greater, 0.4 parts by weight or greater, 0.5 parts by weight or greater, 0.6 parts by weight or greater, 0.7 parts by weight or greater, 0.8 parts by weight or greater, 0.9 parts by weight or greater, or 1.0 parts by weight or greater, and also in an amount of 2.0 parts by weight or less, 1.9 parts by weight or less, 1.8 parts by weight or less, 1.7 parts by weight or less, 1.6 parts by weight or less, 1.5 parts by weight or less, 1.4 parts by weight or less, 1.3 parts by weight or less, 1.2 parts by weight or less, 1.1 parts by weight or less, or 1.0 part by weight or less, and within this range, the polymerization rate may be maintained at an appropriate level.

According to an embodiment of the present invention, upon the emulsion polymerization of the step (S10), the polymerization conversion rate may be obtained based on Equation 1 below by taking a predetermined amount of a sample from a composition being reacted at regular time intervals, and then measuring the solid content in the sample. Polymerization conversion rate (%) = [(Ms - Mo) / (Mp - M'o)] X 100

In Equation 1 above, Ms indicates the weight of a dried copolymer, Mo indicates the sum of the weights of an emulsifier and a polymerization initiator, Mp indicates the weight of a 100% polymerized copolymer, and M'o indicates the sum of the weights of an emulsifier and a polymerization initiator.

According to an embodiment of the present invention, the method for preparing a polymer composition may include a step (S20) of adding a ph regulator to the polymer latex prepared in the step (S10); and a step (S30) of obtaining the polymer latex that pH is regulated in the step (S20) in an emulsion phase.

According to an embodiment of the present invention, the step (S20) is a step of regulating the pH of the polymer latex prepared in the step (S10), and the polymer composition obtained from the step (S30) through the step (S20) may be regulated to have a pH of 7.0 to 10.0 at 25 °C. In this case, the pH regulator may be a basic compound, specifically alkali hydroxide and/or aqueous ammonia solution, and more specifically sodium hydroxide or potassium hydroxide.

According to an embodiment of the present invention, the step (S30) is a step of obtaining a polymer latex in an emulsion phase, and may be performed by including a deodorization step for removing unreacted monomers and residual components, if necessary. The polymer composition obtained from the step (S30) may be an alkali-soluble polymer composition, specifically an alkali soluble emulsion polymer, that is, an alkali soluble resin (ASR), and the polymer composition may thus be present in a latex state.

The present invention provides a latex composition for dip molding for preparing a molded article through dip molding.

According to an embodiment of the present invention, the latex composition for dip molding may include a carboxylic acid-modified nitrile-based copolymer latex and the polymer composition, the carboxylic acid-modified nitrile-based copolymer latex may include a carboxylic acid-modified nitrile-based copolymer, and the carboxylic acid-modified nitrile-based copolymer may include a conjugated diene-based monomer unit, an ethylenically unsaturated nitrile-based monomer unit, and an ethylenically unsaturated acid monomer unit.

According to an embodiment of the present invention, the carboxylic acid-modified nitrile-based copolymer latex may be present in a latex state in which the carboxylic acid-modified nitrile-based copolymer is dispersed in a solvent, and the solvent may be an aqueous solvent. As a specific example, the aqueous solvent may be water, and the water may be ion-exchanged water or distilled water.

According to an embodiment of the present invention, the carboxylic acid-modified nitrile-based copolymer may include a monomer unit derived from the same monomer as the polymer or a monomer of the same family as described above, and as a specific example, may include a conjugated diene-based monomer unit, an ethylenically unsaturated nitrile-based monomer unit, and an ethylenically unsaturated acid monomer unit.

According to an embodiment of the present invention, the conjugated diene-based monomer for forming the conjugated diene-based monomer unit of the carboxylic acid-modified nitrile-based copolymer may be at least one selected from the group consisting of 1,3-butadiene, 2,3-dimethyl-1,3-butadiene, 2-ethyl-1,3-butadiene, 1,3-pentadiene, and isoprene, specifically 1,3-butadiene or isoprene, and more specifically 1,3-butadiene. In this case, a conjugated diene-based monomer forming the conjugated diene-based monomer unit of the polymer and a conjugated diene-based monomer forming the conjugated diene-based monomer unit of the carboxylic acid-modified nitrile-based copolymer may be the same or different.

According to an embodiment of the present invention, the carboxylic acid-modified nitrile-based copolymer may include the conjugated diene-based monomer-derived repeating unit in an amount of 35 wt% to 80 wt%, 40 wt% to 75 wt%, or 45 wt% to 70 wt%, and within this range, a molded article molded from the latex composition for dip molding including a carboxylic acid-modified nitrile-based copolymer latex containing the carboxylic acid-modified nitrile-based copolymer is flexible, has excellent wearability, as well as excellent oil resistance and tensile strength.

According to an embodiment of the present invention, the ethylenically unsaturated nitrile-based monomer forming the ethylenically unsaturated nitrile-based monomer unit of the carboxylic acid-modified nitrile-based copolymer may be at least one selected from the group consisting of acrylonitrile, methacrylonitrile, fumaronitrile, α-chloronitrile and α-cyanoethyl acrylonitrile, and as a specific example, may be acrylonitrile and methacrylonitrile, and more specifically, may be acrylonitrile. In this case, an ethylenically unsaturated nitrile-based monomer forming the ethylenically unsaturated nitrile-based monomer unit of the polymer and an ethylenically unsaturated nitrile-based monomer forming the ethylenically unsaturated nitrile-based monomer unit of the carboxylic acid-modified nitrile-based copolymer may be the same or different.

According to an embodiment of the present invention, the carboxylic acid-modified nitrile-based copolymer may include the ethylenically unsaturated nitrile-based monomer unit in an amount of 20 wt% to 50 wt%, 20 wt% to 45 wt%, or 25 wt% to 40 wt%, and within this range, a molded article molded from the latex composition for dip molding including a carboxylic acid-modified nitrile-based copolymer latex composition containing the carboxylic acid-modified nitrile-based copolymer is flexible, has excellent wearability as well as excellent oil resistance and tensile strength.

According to an embodiment of the present invention, the ethylenically unsaturated acid monomer forming the ethylenically unsaturated acid monomer unit of the carboxylic acid-modified nitrile-based copolymer may be an ethylenically unsaturated monomer including an acidic group such as a carboxyl group, a sulfonic acid group, or an acid anhydride group, and as a specific example, may be at least one selected from the group consisting of ethylenically unsaturated carboxylic acid monomers such as acrylic acid, methacrylic acid, itaconic acid, maleic acid, and fumaric acid; polycarboxylic anhydrides such as maleic anhydride and citraconic anhydride; ethylenically unsaturated sulfonic acid monomers such as styrene sulfonic acid; ethylenically unsaturated polycarboxylic acid partial ester monomers such as monobutyl fumarate, monobutyl maleate, and mono-2-hydroxy propyl maleate, and more specifically, may be methacrylic acid. The ethylenically unsaturated acid monomer may be used in the form of a salt such as an alkali metal salt or an ammonium salt upon polymerization. In this case, an ethylenically unsaturated acid monomer forming the ethylenically unsaturated acid monomer unit of the polymer. and an ethylenically unsaturated acid monomer unit of the carboxylic acid-modified nitrile-based copolymer may be the same or different.

According to an embodiment of the present invention, the carboxylic acid-modified nitrile-based copolymer may include the ethylenically unsaturated acid monomer-derived repeating unit in an amount of 0.1 wt% to 10 wt%, 0.5 wt% to 9 wt%, or 1 wt% to 8 wt%, and within this range, a molded article molded from the latex composition for dip molding including a carboxylic acid-modified nitrile-based copolymer latex composition containing the carboxylic acid-modified nitrile-based copolymer is flexible, has excellent wearability as well as excellent tensile strength.

According to an embodiment of the present invention, the latex composition for dip molding is designed to perform dip molding using the carboxylic acid-modified nitrile-based copolymer latex and regulate the pH of the carboxylic acid-modified nitrile-based copolymer latex, and may include a crosslinking agent composition for inducing crosslinking upon dip molding. In this case, the latex composition for dip molding according to the present invention includes the polymer composition together, and may thus improve latex stability, particularly storage stability and low temperature stability of the latex composition for dip molding.

According to an embodiment of the present invention, the latex composition for dip molding may include the polymer composition in an amount of 1 part by weight to 15 parts by weight in terms of solid content with respect to 100 parts by weight of the carboxylic acid-modified nitrile-based copolymer latex in terms of solid content. As a specific example, the latex composition for dip molding may include the polymer composition in an amount of 1 part by weight or greater, 2 parts by weight or greater, 3 parts by weight or greater, 4 parts by weight or greater, or 5 parts by weight or greater, and also 15 parts by weight or less, 14 parts by weight or less, 13 parts by weight or less, 12 parts by weight or less, 11 parts by weight or less, 10 parts by weight or less, 9 parts by weight or less, 8 parts by weight or less, 7 parts by weight or less, 6 parts by weight or less, or 5 part by weight or less in terms of solid content with respect to 100 parts by weight of the carboxylic acid-modified nitrile-based copolymer latex in terms of solid content, and within this range, both wearability and mechanical properties such as tensile properties of a molded article molded from the latex composition for dip molding may be further improved.

According to an embodiment of the present invention, the crosslinking agent composition may be for forming a crosslinking portion derived from a crosslinking agent through a crosslinking reaction with respect to the carboxylic acid-modified nitrile-based copolymer.

According to an embodiment of the present invention, the crosslinking agent composition may include a vulcanizing agent and a vulcanization accelerator, and more specifically, may include a vulcanizing agent, a vulcanization accelerator, and zinc oxide.

According to an embodiment of the present invention, the vulcanizing agent is for vulcanizing the latex composition for dip molding, and may be sulfur, specifically sulfur such as powdered sulfur, precipitated sulfur, colloidal sulfur, surface-treated sulfur, and insoluble sulfur. The amount of the vulcanizing agent may be 0.1 parts by weight to 10 parts by weight, or 1 part by weight to 5 parts by weight, with respect to 100 parts by weight of a total amount of the carboxylic acid-modified nitrile-based copolymer (in terms of solid content) in the latex composition for dip molding, and within this range, crosslinking ability through vulcanization is excellent.

According to an embodiment of the present invention, the vulcanization accelerator may be at least one selected from the group consisting of 2-mercaptobenzothiazole (MBT), 2,2-dithiobisbenzothiazole-2-sulfenamide (MBTS), N-cyclohexylbenzothiazole-2-sulfenamide (CBS), 2-morpholinothiobenzothiazole (MBS), tetramethylthiuram monosulfide (TMTM), tetramethylthiuram disulfide (TMTD), zinc diethyldithiocarbamate (ZDEC), zinc di-n-butyldithiocarbamate (ZDBC), diphenylguanidine (DPG), and di-o-tolylguanidine. The amount of the vulcanization accelerator may be 0.1 parts by weight to 10 parts by weight, or 0.5 part by weight to 5 parts by weight, with respect to 100 parts by weight of a total amount of the carboxylic acid-modified nitrile-based copolymer (in terms of solid content) in the latex composition for dip molding, and within this range, crosslinking ability through vulcanization is excellent.

According to an embodiment of the present invention, the zinc oxide may be a crosslinking agent for performing ionic bonding with a carboxyl group of the carboxylic acid-modified nitrile-based copolymer in the latex composition for dip molding and forming a crosslinking portion through the ionic bonding in the carboxylic acid-modified nitrile-based copolymer or between the carboxylic acid-modified nitrile-based copolymers. The amount of the zinc oxide may be 0.1 parts by weight to 5 parts by weight, or 0.5 part by weight to 4 parts by weight, with respect to 100 parts by weight of a total amount of the carboxylic acid-modified nitrile-based copolymer (in terms of solid content) in the latex composition for dip molding, and within this range, the crosslinking ability and latex stability are excellent, and the tensile strength and flexibility of a prepared article are excellent.

According to an embodiment of the present invention, the latex composition for dip molding may have a solid content (concentration) of 5 wt% to 40 wt%, 8 wt% to 35 wt%, or 10 wt% to 33 wt%, and within this range, efficiency of transporting latex is excellent, and an increase in the viscosity of latex is prevented, resulting in excellent storage stability.

According to an embodiment of the present invention, the latex composition for dip molding may have a pH of 9 to 12, 9 to 11, or 9.5 to 10.5 at 25 °C, and within this range, processability and productivity are excellent upon preparing a dip molded article. The pH of the latex composition for dip molding may be regulated by adding the pH regulator described above.

According to an embodiment of the present invention, the latex composition for dip molding may further include additives such as pigments such as titanium dioxide, fillers such as silica, thickeners, and pH regulators, if necessary.

The present invention provides a molded article.

According to an embodiment of the present invention, the molded article may include a layer derived from a latex composition for dip molding. The molded article may be a dip molded article prepared by dip molding the latex composition for dip molding, and may be a molded article including a layer derived from a latex composition for dip molding, formed from the latex composition for dip molding through dip molding. A molded article preparation method for molding the molded article may include dipping the latex composition for dip molding using methods such as a direct dipping method, an anode coagulation dipping method and a Teague coagulation dipping method, and may specifically be performed through the anode coagulation dipping method, in which case a dip molded article having a uniform thickness may be obtained.

According to an embodiment of the present invention, the method for preparing a molded article may include a step (S100) of adhering a coagulant to a dip mold; a step (S200) of dipping the dip mold having the coagulant adhering thereto in a latex composition for dip molding to form a layer derived from the latex composition for dip molding, that is, a dip molding layer; and a step (S300) of heating the dip molding layer to crosslink the latex composition for dip molding.

According to an embodiment of the present invention, the step (S100) is a step of dipping a dip mold in a coagulant solution to adhere a coagulant to a surface of the dip mold so as to form the coagulant in the dip mold, and the coagulant solution is a solution in which a coagulant is dissolved in water, alcohol, or a mixture thereof, and the coagulant in the coagulant solution may be in an amount of 5 wt% to 75 wt%, 5 wt% to 50 wt%, or 10 wt% to 40 wt% with respect to a total amount of the coagulant solution. The coagulant may be at least one selected from the group consisting of metal halides such as barium chloride, calcium chloride, magnesium chloride, zinc chloride, and aluminum chloride; nitrates such as barium nitrate, calcium nitrate, and zinc nitrate; acetates such as barium acetate, calcium acetate, and zinc acetate; and sulfates such as calcium sulfate, magnesium sulfate, and aluminum sulfate, and as a specific example, may be calcium chloride or calcium nitrate. In addition, according to an embodiment of the present invention, the step (S100) may further include immersing the dip mold in the coagulant solution for 5 seconds or longer to adhere the coagulant to the dip mold, taking out the dip mold, and drying the dip mold at 50 °C to 150 °C.

According to an embodiment of the present invention, the step (S200) may be a step of dipping the dip mold having the coagulant adhering thereto in the latex composition for dip molding according to the present invention to form a dip molding layer, and taking out the dip mold to form a dip molding layer in the dip mold. In addition, according to an embodiment of the present invention, in the step (S200), the dipping may be performed for 5 seconds or longer upon the dipping to form a dip molding layer in the dip mold.

According to an embodiment of the present invention, the step (S300) may be a step of heating the dip molding layer formed in the dip mold to evaporate a liquid component, and crosslinking the latex composition for dip molding to perform curing so as to obtain a dip molded article. In this case, when the latex composition for dip molding according to the present invention is used, a crosslinking agent composition included in the latex composition for dip molding may be crosslinked through vulcanization and/or ionic bonding. In addition, according to an embodiment of the present invention, the heating may be performed through primary heating at 70 °C to 150 °C for 1 minute to 10 minutes, and then secondary heating at 100 °C to 180 °C for 5 minutes to 30 minutes. In this case, after the first heating, before performing the secondary heating, the method may further include a step of leaching through immersion in water or hot water for 10 seconds to 10 minutes.

According to an embodiment of the present invention, the molded article may be gloves such as surgical gloves, examination gloves, industrial gloves, and household gloves, condoms, catheter, or health care articles.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

### <Preparation of polymer composition>

A 10 L high pressure reactor equipped with a thermometer, a cooler, an inlet for nitrogen gas, and an inlet for continuously introducing monomers, emulsifiers, and polymerization initiators was used. After replacing the 10 L high pressure reactor with nitrogen, with respect to 100 parts by weight of a total amount of acrylonitrile, 1,3-butadiene, and methacrylic acid, a monomer mixture in an amount of 100 parts by weight composed of acrylonitrile in an amount of 20 parts by weight, 1,3-butadiene in an amount of 60 parts by weight, and methacrylic acid in an amount of 20 parts by weight, sodium dodecyl benzenesulfonate in an amount of 2.5 parts by weight as an emulsifier, t-dodecyl mercaptan in an amount of 3.5 parts by weight as a molecular weight regulator, and ion-exchanged water in an amount of 250 parts by weight were added and the temperature inside the reactor was raised to 40 °C. After the temperature has been raised, potassium peroxide in an amount of 1.0 parts by weight as a polymerization initiator was added to initiate polymerization, and at the point where the polymerization conversion rate reached 95%, sodium dimethyldithiocarbamate in an amount of 1.0 parts by weight was added to stop the polymerization so as to prepare a polymer latex including a polymer. Then, potassium hydroxide was added to the polymer latex to regulate the pH to 8.5 at 25 °C, and a deodorizing step was performed to remove unreacted monomers, thereby obtaining a polymer composition.

### <Preparation of latex composition for dip molding>

To a carboxylic acid-modified nitrile-based copolymer latex (LG Chem, NL105) in an amount of 100 parts by weight (in terms of solids), the obtained polymer composition in an amount of 5 parts by weight (in terms of solids), an aqueous solution of potassium hydroxide having a concentration of 3 wt% in an amount of 2 parts by weight, vulcanizing agent (Akron dispersions, BOSTEX 378) in an amount of 1.5 parts by weight, vulcanization accelerator (Akron dispersions, BOSTEX 497B) in an amount of 0.7 parts by weight, zinc oxide (Akron dispersions, BOSTEX 422) in an amount of 1.5 parts by weight, titanium dioxide (Akron dispersions, BOSTEX 497D) in an amount of 1.0 parts by weight, and secondary distilled water were added to prepare a latex composition for dip molding having a solid content of 25 wt% and a pH of 10 at 25 °C.

### <Preparation of dip molded article>

Calcium nitrate in an amount of 18 wt%, water in an amount of 81.9 wt%, and a wetting agent (from Huntsman Corporation, Australia, product name: Teric 320) in an amount of 0.1 wt% were mixed to prepare a coagulant solution. A hand-shaped ceramic mold was immersed in the coagulant solution for 10 seconds, and taken out, dried at 80 °C for 4 minutes, and a coagulant was applied to the hand-shaped mold.

Then, the hand-shaped mold to which the coagulant was applied was immersed in the obtained latex composition for dip molding for 10 seconds and taken out, dried at 80 °C for 2 minutes, and immersed in water for 30 seconds, followed by leaching. Again, after crosslinking the mold at 110 °C for 20 minutes, the crosslinked dip molding layer was peeled off from the hand-shaped mold to obtain a glove-shaped dip molded article.

### Example 2

When preparing a polymer composition, except for adding acrylonitrile in an amount of 15 parts by weight instead of 20 parts by weight, 1,3-butadiene in an amount of 70 parts by weight instead of 60 parts by weight, and methacrylic acid in an amount of 15 parts by weight instead of 20 parts by weight from Example 1, a polymer composition was obtained in the same manner as in Example 1, and the polymer composition was used to obtain a latex composition for dip molding and a dip molded article.

### Example 3

When preparing a polymer composition, except for adding acrylonitrile in an amount of 35 parts by weight instead of 20 parts by weight, 1,3-butadiene in an amount of 40 parts by weight instead of 60 parts by weight, and methacrylic acid in an amount of 25 parts by weight instead of 20 parts by weight from Example 1, a polymer composition was obtained in the same manner as in Example 1, and the polymer composition was used to obtain a latex composition for dip molding and a dip molded article.

### Example 4

When preparing a polymer composition, except for adding t-dodecyl mercaptan in an amount of 6.0 parts by weight instead of 3.5 parts by weight from Example 1, a polymer composition was obtained in the same manner as in Example 1, and the polymer composition was used to obtain a latex composition for dip molding and a dip molded article.

### Example 5

When preparing a polymer composition, except for adding t-dodecyl mercaptan in an amount of 1.0 parts by weight instead of 3.5 parts by weight from Example 1, a polymer composition was obtained in the same manner as in Example 1, and the polymer composition was used to obtain a latex composition for dip molding and a dip molded article.

### Example 6

When preparing a latex composition for dip molding, except for adding a polymer composition in an amount of 10 parts by weight instead of 5 parts by weight (in terms of solid content) from Example 1, a dip molded article was obtained in the same manner as in Example 1.

### Example 7

When preparing a latex composition for dip molding, except for adding a polymer composition in an amount of 20 parts by weight instead of 5 parts by weight (in terms of solid content) from Example 1, a dip molded article was obtained in the same manner as in Example 1.

### Example 8

When preparing a polymer composition, except for adding t-dodecyl mercaptan as a molecular weight regulator in an amount of 7.5 parts by weight instead of 3.5 parts by weight from Example 1, a polymer composition was obtained in the same manner as in Example 1, and the polymer composition was used to obtain a latex composition for dip molding and a dip molded article.

### Example 9

When preparing a polymer composition, except for adding t-dodecyl mercaptan as a molecular weight regulator in an amount of 0.85 parts by weight instead of 3.5 parts by weight from Example 1, a polymer composition was obtained in the same manner as in Example 1, and the polymer composition was used to obtain a latex composition for dip molding and a dip molded article.

### Example 10

When preparing a polymer composition, except for adding acrylonitrile in an amount of 13 parts by weight instead of 20 parts by weight, 1,3-butadiene in an amount of 74 parts by weight instead of 60 parts by weight, and methacrylic acid in an amount of 13 parts by weight instead of 20 parts by weight from Example 1, a polymer composition was obtained in the same manner as in Example 1, and the polymer composition was used to obtain a latex composition for dip molding and a dip molded article.

### Example 11

When preparing a polymer composition, except for adding acrylonitrile in an amount of 33 parts by weight instead of 20 parts by weight, 1,3-butadiene in an amount of 37 parts by weight instead of 60 parts by weight, and methacrylic acid in an amount of 30 parts by weight instead of 20 parts by weight from Example 1, a polymer composition was obtained in the same manner as in Example 1, and the polymer composition was used to obtain a latex composition for dip molding and a dip molded article.

### Comparative Example 1

When preparing a polymer composition, except for adding acrylonitrile in an amount of 35 parts by weight instead of 20 parts by weight, 1,3-butadiene in an amount of 35 parts by weight instead of 60 parts by weight, and methacrylic acid in an amount of 30 parts by weight instead of 20 parts by weight from Example 1, a polymer composition was obtained in the same manner as in Example 1, and the polymer composition was used to obtain a latex composition for dip molding and a dip molded article.

### Comparative Example 2

When preparing a polymer composition, except for adding acrylonitrile in an amount of 10 parts by weight instead of 20 parts by weight, 1,3-butadiene in an amount of 80 parts by weight instead of 60 parts by weight, and methacrylic acid in an amount of 10 parts by weight instead of 20 parts by weight from Example 1, a polymer composition was obtained in the same manner as in Example 1, and the polymer composition was used to obtain a latex composition for dip molding and a dip molded article.

### Comparative Example 3

When preparing a polymer composition, except for adding t-dodecyl mercaptan in an amount of 0.5 parts by weight instead of 3.5 parts by weight from Example 1, the preparation was performed in the same manner as in Example 1, but an increase in viscosity upon polymerization deteriorated latex stability, thereby failing to prepare a polymer composition.

### Comparative Example 4

When preparing a polymer composition, except for adding t-dodecyl mercaptan in an amount of 10.0 parts by weight instead of 3.5 parts by weight from Example 1, a polymer composition was obtained in the same manner as in Example 1, and the polymer composition was used to obtain a latex composition for dip molding and a dip molded article.

### Comparative Example 5

When preparing a latex composition for dip molding, except that no polymer composition was added, a dip molded article was obtained in the same manner as in Example 1.

**Experimental Example**

### Experimental Example 1

With respect to the polymer compositions prepared in Examples 1 to 11 and Comparative Examples 1 to 4, the glass transition temperature and weight average molecular weight of polymer were measured as follows, and are shown in Tables 1 to 3 below along with the composition of each monomer added upon the preparation of the polymer compositions, the added amount of the molecular weight regulator, and the amount of the polymer compositions added upon the preparation of the latex composition for dip molding.

* Glass transition temperature (Tg, °C): The polymer compositions prepared in Examples 1 to 11 and Comparative Examples 1 to 4 were dried in an oven at 130 °C for 1 hour to prepare samples in the form of a film. With respect to about 1 mg of the prepared samples, the glass transition temperature was measured while raising the temperature from -70 °C to 70 °C at a heating rate of 20 ° C/min, using DSC 2920 from TA Instrument, which is differential scanning calorimetry.

* Weight average molecular weight (Mw, g/mol): The films obtained by drying the polymer compositions prepared in Examples 1 to 11 and Comparative Examples 1 to 4 were dissolved in tetrahydrofuran (THF) at a constant-temperature constant-humidity chamber (25 °C, relative humidity: 50% ) for 24 hours to obtain only a portion of the sol dissolved in tetrahydrofuran, and measure the weight average molecular weight under the following conditions, using gel permeation chromatography (GPC, Waters 2414 Refractive Index Detector with external column heater; Waters 1515 Isocractic pump, Waters 717 plus Autosampler).
- Column PL gel Mixed-B from Agilent
- Solvent: THF
- Flow rate: 1 mL/min
- Sample concentration: 1 mg/mL
- Injection volume: 10 µL
- Column temperature: 40 °C
- Detector: Waters 2414 Refractive Index Detector with external column heater
- Standard: Polystyrene

**[Table 1]**

| Item | | | Example | | | | | | |
|---|---|---|---|---|---|---|---|---|---|
| | | | 1 | 2 | 3 | 4 | 5 | 6 | 7 |
| Monomer | AN¹⁾ | (Parts by weight) | 20 | 15 | 35 | 20 | 20 | 20 | 20 |
| | BD²⁾ | (Parts by weight) | 60 | 70 | 40 | 60 | 60 | 60 | 60 |
| | MAA^{3 )} | (Parts by weight) | 20 | 15 | 25 | 20 | 20 | 20 | 20 |
| Molecular weight regulator | TDDM⁴⁾ | (Parts by weight) | 3.5 | 3.5 | 3.5 | 6.0 | 1.0 | 3.5 | 3.5 |
| Polymer | Tg | (°C) | -12.0 | -27.8 | 23.4 | -12.0 | -12.0 | -12.0 | -12.0 |
| | Mw | (g/mol) | 12,000 | 12,200 | 11,800 | 7,000 | 42,000 | 12,000 | 12,000 |
| | Input amount | (Parts by weight) | 5 | 5 | 5 | 5 | 5 | 10 | 20 |
| 1) AN: Acrylonitrile | | | | | | | | | |
| 2) BD: 1,3-Butadiene | | | | | | | | | |
| 3) MAA: Methacrylic acid | | | | | | | | | |
| 4) TDDM: T-dodecyl mercaptan | | | | | | | | | |

**[Table 2]**

| Item | | | Example | | | |
|---|---|---|---|---|---|---|
| | | | 8 | 9 | 10 | 11 |
| Monomer | AN¹⁾ | (Parts by weight) | 20 | 20 | 13 | 33 |
| | BD²⁾ | (Parts by weight) | 60 | 60 | 74 | 37 |
| | MAA³⁾ | (Parts by weight) | 20 | 20 | 13 | 30 |
| Molecular weight regulator | TDDM⁴⁾ | (Parts by weight) | 7.5 | 0.85 | 3.5 | 3.5 |
| Polymer | Tg | (°C) | -12.0 | -12.0 | -33.6 | 32.4 |
| | Mw | (g/mol) | 5, 600 | 49,400 | 12,300 | 11,500 |
| | Input amount | (Parts by weight) | 5 | 5 | 5 | 5 |
| 1) AN: Acrylonitrile | | | | | | |
| 2) BD: 1,3-Butadiene | | | | | | |
| 3) MAA: Methacrylic acid | | | | | | |
| 4) TDDM: T-dodecyl mercaptan | | | | | | |

**[Table 3]**

| Item | | | Comparative Example | | | | |
|---|---|---|---|---|---|---|---|
| | | | 1 | 2 | 3 | 4 | 5 |
| Monomer | AN¹⁾ | (Parts by weight) | 35 | 10 | 20 | 20 | - |
| | BD²⁾ | (Parts by weight) | 35 | 80 | 60 | 60 | - |
| | MAA³⁾ | (Parts by weight) | 30 | 10 | 20 | 20 | - |
| Molecular weight regulator | TDDM⁴⁾ | (Parts by weight) | 3.5 | 3.5 | 0.5 | 10.0 | - |
| Polymer | Tg | (°C) | 36.4 | -41.9 | Unable to complete polymerization | -12.0 | - |
| | Mw | (g/mol) | 11,600 | 12,500 | | 4,200 | - |
| | Input amount | (Parts by weight) | 5 | 5 | | 5 | 0 |
| 1) AN: Acrylonitrile | | | | | | | |
| 2) BD: 1,3-Butadiene | | | | | | | |
| 3) MAA: Methacrylic acid | | | | | | | |
| 4) TDDM: T-dodecyl mercaptan | | | | | | | |

As shown in Tables 1 to 3, it was confirmed that the polymers of Examples 1 to 11 according to the present invention exhibited the weight average molecular weight and glass transition temperature defined in the present invention.

On the other hand, it was confirmed that the polymer of the polymer composition of Comparative Example 1 had a glass transition temperature higher than the range defined in the present invention, and the polymer of the polymer composition of Comparative Example 2 had a glass transition temperature lower than the range defined in the present invention.

For Comparative Example 3, an attempt was made to prepare a polymer composition including a polymer having a weight average molecular weight higher than the range defined in the present invention, but it was confirmed that deterioration in latex stability due to an increase in viscosity upon polymerization prevented the preparation of the polymer composition.

In addition, it was confirmed that the polymer of the polymer composition of Comparative Example 4 had a weight average molecular weight lower than the range defined in the present invention.

### Experimental Example 2

The low temperature stability of the latex compositions for dip molding prepared in Examples 1 to 11 and Comparative Examples 1 to 5, and the tensile strength, elongation, and modulus of the dip molded articles were measured as follows and are shown in Tables 4 to 6 below.

* Low temperature stability (ppm): The polymer compositions prepared in Examples 1 to 11 and Comparative Examples 1 to 5 in an amount of 2 parts by weight (in terms of solid content) were added to the carboxylic acid-modified nitrile-based copolymer latex (LG Chem, NL105) in an amount of 100 parts by weight (in terms of solid content) and mixed at room temperature for 2 hours. After the resulting products were stored at -5 °C for 24 hours, the amount of the resulting coagulated product was measured. In this case, that the measured congelation amount is lower indicates that the low temperature stability is greater.

* Tensile strength (MPa): Using the dip-molded articles obtained in each Example and Comparative Example, dumbbell-shaped specimens were prepared in accordance with ASTM D-412. In accordance with ASTM D638, using a UTM (Universal Testing Machine) device (from Instron, model name: 4466), these specimens were elongated at a crosshead rate of 500 mm/min, and then the point at which these specimens were broken was measured and tensile strength was calculated according to Equation 2 below and converted to MPa (1 MPa = 0.10197 kgf/mm²). In this case, that the calculated tensile strength is greater indicates that tensile properties are better. Tensile strength (kgf/mm2) = load value (kgf)/(thickness (mm) × width (mm)

* Elongation (%): In accordance with ASTM D638, using a UTM (Universal Testing Machine) device (from Instron, model name: 4466), the specimens prepared for measuring the tensile strength were elongated at a crosshead rate of 500 mm/min, and then the point at which these specimens were broken was measured, and the elongation was calculated according to Equation 3 below. In this case, that the elongation is greater indicates that tensile properties are better. Elongation (%) = (length of specimen after stretching / length of specimen before stretching) × 100

* 500% modulus (MPa): In accordance with ASTM D638, using a UTM (Universal Testing Machine) device (from Instron, model name: 4466), the specimens prepared for measuring the tensile strength were elongated at a crosshead rate of 500 mm/min, and then the 500% modulus, which is the tensile strength when the specimens were elongated 5 times the length of the specimens before tension, was measured. In this case, that the measured 500% modulus is lower indicates that wearability is better.

**[Table 4]**

| Item | | Example | | | | | | |
|---|---|---|---|---|---|---|---|---|
| | | 1 | 2 | 3 | 4 | 5 | 6 | 7 |
| Low temperature stability | (ppm ) | <10 | <10 | <10 | <10 | <10 | <10 | <10 |
| Tensile strength | (MPa ) | 38.5 | 36.7 | 39.4 | 37.1 | 39.1 | 38.2 | 30.2 |
| Elongation | (%) | 645 | 642 | 625 | 647 | 630 | 660 | 690 |
| 500% modulus | (MPa ) | 13.8 | 14.5 | 15.0 | 13.5 | 14.6 | 13.3 | 11.7 |

**[Table 5]**

| Item | | Example | | | |
|---|---|---|---|---|---|
| | | 8 | 9 | 10 | 11 |
| Low temperature stability | (ppm) | <10 | 20 | <10 | <10 |
| Tensile strength | (MPa) | 36.2 | 36.5 | 35.9 | 35.7 |
| Elongation | (%) | 638 | 605 | 650 | 595 |
| 500% modulus | (MPa) | 14.0 | 15.1 | 13.2 | 17.3 |

**[Table 6]**

| Item | | Comparative Example | | | | |
|---|---|---|---|---|---|---|
| | | 1 | 2 | 3 | 4 | 5 |
| Low temperature stability | (ppm) | <10 | <10 | Not measur able | <10 | 100 |
| Tensile strength | (MPa) | 34.2 | 33.5 | | 34.3 | 35.0 |
| Elongation | (%) | 580 | 680 | | 615 | 630 |
| 500% modulus | (MPa) | 18.5 | 11.5 | | 14.2 | 15.2 |

As shown in Tables 3 and 4, it was confirmed that the latex compositions for dip molding including the polymer compositions of Examples 1 to 11 of the present invention had greater low temperature stability than the latex composition for dip molding of Comparative Example 5 without a polymer composition.

In addition, it was confirmed that the dip molded articles molded from the latex composition for dip molding of Examples 1 to 11 of the present invention showed equal or higher levels of tensile strength, elongation, and 500% modulus compared to the dip molded articles molded from the latex composition for dip molding of Comparative Example 5.

In particular, it was confirmed that in the latex composition for dip molding of Examples 1 to 5 and 8 of the present invention and the dip molded articles molded therefrom, with the latex composition for dip molding including a polymer composition in an appropriate amount, excellent low temperature stability and significantly improved tensile properties of the molded articles were achieved.

Meanwhile, it was confirmed that the dip molded article molded from the latex composition for dip molding of Comparative Example 1, including the polymer composition having a polymer glass transition temperature higher than the range defined in the present invention had poor tensile properties, and poorer wearability than Comparative Example 5.

In addition, it was confirmed that the dip molded article molded from the latex composition for dip molding of Comparative Example 2, including the polymer composition having a polymer glass transition temperature lower than the range defined in the present invention had significant deterioration in tensile properties.

In addition, it was confirmed that the dip molded article molded from the latex composition for dip molding of Comparative Example 4, including the polymer composition in which the weight average molecular weight of a polymer is lower than the range defined in the present invention had deterioration in both tensile properties and wearability.

Based on these results, it was confirmed that the polymer composition according to the present invention was applicable as a latex stabilizer of the latex composition for dip molding, and improved the latex stability, particularly storage stability and low temperature stability of the latex composition for dip molding including the polymer composition, and also it was confirmed that the molded article molded therefrom had improved softness for excellent wearability, and excellent tensile properties.

## Claims

1. A polymer composition comprising a polymer dispersed in a solvent,
wherein the polymer comprises a conjugated diene-based monomer unit, an ethylenically unsaturated nitrile-based monomer unit, and an ethylenically unsaturated acid monomer unit, and
the polymer has a weight average molecular weight of 5,000 g/mol to 50,000 g/mol, and a glass transition temperature of -34 °C to 33 °C.

2. The polymer composition of claim 1, wherein the solvent is an aqueous solvent.

3. The polymer composition of claim 1, wherein the polymer comprises the conjugated diene-based monomer unit in an amount of 40 wt% to 75 wt%, the ethylenically unsaturated nitrile-based monomer unit in an amount of 10 wt% to 50 wt%, and the ethylenically unsaturated acid monomer unit in an amount of 10 wt% to 50 wt%.

4. The polymer composition of claim 1, wherein the polymer has a weight average molecular weight of 7,000 g/mol to 46,000 g/mol.

5. The polymer composition of claim 1, wherein the polymer has a glass transition temperature of -28 °C to 24 °C.

6. The polymer composition of claim 1, wherein the polymer composition has a pH of 7.0 to 10.0 at 25 °C.

7. A method for preparing a polymer composition, the method comprising:
a step (S10) of preparing a polymer latex comprising a polymer through emulsion polymerization of a conjugated diene-based monomer, an ethylenically unsaturated nitrile-based monomer, and an ethylenically unsaturated acid monomer in a solvent,
wherein the polymer polymerized in the step (S10) has a weight average molecular weight of 5,000 g/mol to 50,000 g/mol, and a glass transition temperature of -34 °C to 33 °C.

8. The method of claim 7, wherein the emulsion polymerization of the step (S10) is performed by adding a molecular weight regulator in an amount of 0.8 parts by weight to 8.0 parts by weight with respect to 100 parts by weight of a total monomer amount.

9. The method of claim 7, wherein the method comprises a step (S20) of adding a ph regulator to the polymer latex prepared in the step (S10); and
a step (S30) of obtaining the polymer latex that pH is regulated in the step (S20) in an emulsion phase.

10. A latex composition for dip molding comprising a carboxylic acid-modified nitrile-based copolymer latex and the polymer composition according to any one of claims 1 to 6,
wherein the carboxylic acid-modified nitrile-based copolymer latex comprises a carboxylic acid-modified nitrile-based copolymer, and
the carboxylic acid-modified nitrile-based copolymer comprises a conjugated diene-based monomer unit, an ethylenically unsaturated nitrile-based monomer unit, and an ethylenically unsaturated acid monomer unit.

11. The latex composition for dip molding of claim 10, wherein the latex composition for dip molding comprises the polymer composition in an amount of 1 part by weight to 15 parts by weight in terms of solid content with respect to 100 parts by weight of the carboxylic acid-modified nitrile-based copolymer latex in terms of solid content.

12. A molded article comprising a layer derived from the latex composition-for dip molding according to claim 10.
